# EUROPEAN PATENT APPLICATION

(11) **EP 2 123 704 A1**
(43) Date of publication of application: **25.11.2009**
(21) Application number: 08156641.6
(22) Date of filing: 21.05.2008
(51) Int. Cl.: C08J 9/14

(54) **Ternary solvent mixtures of hydrofluoroalkanes and non fluorinated hydrocarbons**

(71) Applicant: Solvay Fluor GmbH, 30173 Hannover (DE)
(72) Inventor: Ünveren, Ercan, 30625 Hannover (DE); Seseke-Koyro, Ulrich, 30916 Isernhagen (DE); Rau, Helge, 31303 Burgdorf (DE)
(74) Representative: Mross, Stefan P.M.

(57) **Abstract**

The present invention refers to solvent mixtures comprising 1,1,1,3,3-pentafluorobutane (365-mfc), 1,1,2,2-tetrafluoroethyl methyl ether (HFE-254pc), and a compound selected from the group consisting of cyclopentane, n-pentane and isopentane. The solvent mixtures preferably have a boiling point of less than 30°C at atmospheric pressure.

The present invention furthermore relates to compositions containing the solvent mixtures. The solvent mixtures and compositions containing those solvent mixtures can be used as blowing agents, cooling liquids, solvents, desiccating agents or degreasing agents for solid surfaces.

## Description

The present invention refers to solvent mixtures comprising 1,1,1,3,3-pentafluorobutane (365-mfc), 1,1,2,2-tetrafluoroethyl methyl ether (HFE-254pc), and a compound selected from the group consisting of cyclopentane, n-pentane and isopentane. The solvent mixtures preferably have a boiling point of less than 30°C at atmospheric pressure. The present invention furthermore relates to compositions containing the ternary solvent mixtures. The ternary solvent mixtures and the compositions containing those ternary solvent mixtures can preferably be used as blowing agents, cooling liquids, solvents, desiccating agents or degreasing agents for solid surfaces.

Halogenated chlorofluorinated hydrocarbons (CFCs) are used as blowing agents, cooling liquids and solvents in various technical applications. For example, polyurethane foams can be prepared by reacting an isocyanate with an appropriate amount of a polyol or a mixture of polyols in the presence of a blowing agent consisting of a volatile liquid, which is evaporated by the heat created by the reaction between the isocyanate and the polyol. Trichlorofluoromethane (CFC-11), dichlorodifluoromethane (CFC-12) and, to a lesser extent, chlorodifluoromethane (HCFC-22), 1,1,2-trichlorotrifluoroethane (CFC-113) and 1,2-dichlorotetrafluoroethane (CFC-114) have been used for a long time as blowing agents. Because of its very low thermal conductivity, CFC-11 makes it possible to obtain particularly insulating rigid polyurethane foams, which are intensively used as thermal insulators, in particular in the fields of construction, refrigeration and transportation. Furthermore, halogenated chlorofluorinated hydrocarbons (CFCs) are used in the refrigeration industry e.g. in refrigerators or automobile air-conditioning.

However, due to strict environmental regulations, CFCs are banned in the majority of their conventional applications today.

Chlorine-free hydrofluoroalkanes are inert and do not negatively influence the stratospheric ozone layer and these compounds are widely used in numerous applications, to avoid the use of compounds carrying chlorine atoms. For example, the use of 1,1,1,3,3-pentafluorobutane (HFC-365mfc) has been proposed in various applications. Japanese Patent Applications JP 05/168805 and JP 05/171190 describe solvent compositions comprising 1,1,1,3,3-pentafluorobutane, a cosolvent soluble in 1,1,1,3,3-pentafluorobutane and optionally a surfactant. These compositions can be used for cleaning objects or for the removal of residual water in the electronics industry.

However, it is assumed that the chlorine-free hydrofluoroalkanes may contribute to the global warming as they absorb the thermal radiation emitted by the earth and therefore may prevent energy from leaving the atmosphere. It is therefore also desirable to provide compositions having low global warming potential.

The use of solvent mixtures consisting of a combination of hydrofluoroalkanes with non fluorinated hydrocarbons allows to reduce the amounts of hydrofluoroalkanes. Some binary compositions are described in the aforementioned Japanese Patent Applications. These binary compositions comprise 4 % of n-pentane, 10 % of cyclopentane or alternatively 5 % of hexane.

A problem with those mixtures is that they can significantly change their composition over time when some compounds evaporate. This is a particular problem in foaming applications since the foaming agent is responsible for many properties of the foam, e.g. isolation and anti-burning properties. These properties could not be predicted, if the composition of the solvent composition used for preparing the foam would not be constant. Therefore, such solvent compositions in practice are most useful if they form azeotropes or pseudoazeotropes.

Murphy et al. (International CFC and Halon Alternatives Conference, Washington D.C., 1993, pp. 346-355) describe the use of cyclopentane/HFC-365mfc binary mixtures containing at least 54 % by weight of cyclopentane as blowing agents for polyurethane foams. However, it has been noticed that there is a risk, in certain cases and under certain circumstances, of HFC-365mfc and the mixtures mentioned above condensing in the cells of the foam, resulting in a deterioration in its thermal conductivity and optionally in its mechanical properties.

US20050156138 discloses near azeotropic binary refrigerant compositions comprising 1,1,1,3,3-pentafluorobutane and 1-methoxy-1,1,2,2-tetrafluoroethane or 2-methoxy-1,1,2,2-tetrafluoroethane. These binary compositions have a significant global warming potential.

One of the objects of the present invention is therefore to provide advantageous solvent mixtures comprising hydrofluoroalkanes and non fluorinated hydrocarbons for the use as blowing agents, cooling liquids, solvents, desiccating agents or degreasing agents for solid surfaces. Those solvent mixtures should possess the physical properties which are required for the aforementioned applications, but should not contain chlorinated hydrocarbons. For the use as blowing agents for the preparation of polymeric cellular foams of low thermal conductivity in a wide range of temperatures, particularly foams with closed cells of homogeneous size, it would be of advantage that the solvent mixtures have a low boiling point, especially a boiling point close to the boiling point of CFC-11 or 1,1-dichloro-1-fluoroethane (HCFC-141b).

The above mentioned objects have been achieved by providing the solvent mixtures and compositions containing those solvent mixtures as defined in the claims.

The present invention thus provides solvent mixtures comprising 1,1,1,3,3-pentafluorobutane (365-mfc), 1,1,2,2-tetrafluoroethyl methyl ether (HFE-254pc), and a compound selected from the group consisting of cyclopentane, n-pentane and isopentane. Preferably, the present invention provides solvent mixtures which consist essentially of a ternary mixture of 1,1,1,3,3-pentafluorobutane (365-mfc), 1,1,2,2-tetrafluoroethyl methyl ether (HFE-254pc), and a compound selected from the group consisting of cyclopentane, n-pentane and isopentane, more preferably, the solvent mixtures of the present invention consist of the above defined ternary mixtures. Consisting essentially of relates to a content of at least 90 % by weight, based on the total weight of the mixture, preferably at least 95 % by weight.

The solvent mixtures preferably have a boiling point of less than 30°C at atmospheric pressure (101325 Pa), more preferably, the boiling point is below 28°C, further preferred below 27°C, further preferred below 26°C, further preferred below 25°C, further preferred below 24.5°C, and further preferred below 24.4°C at atmospheric pressure. It is additionally preferred that the ternary solvent mixtures have a boiling point of at least 24°C (all boiling points referred to are under an atmospheric pressure, if nothing else is explicitly stated or obvious for a skilled person).

In an especially preferred embodiment of the invention, the solvent mixtures contain at least 10 vol.- % of the compound selected from the group consisting of cyclopentane, n-pentane and isopentane. In the present specification volume (vol) % in the solvent mixtures is typically understood to denote solvent mixtures obtainable by mixing the corresponding volumes of neat compound (e.g. HFC-365mfc, HFE-254pc and pentanes) at a temperature of 20°C. It is further preferred that the compound is selected from the group consisting of cyclopentane and isopentane. Cyclopentane is most preferred.

Preferably, the solvent mixtures contain 1,1,1,3,3-pentafluorobutane (365-mfc) and 1,1,2,2-tetrafluoroethyl methyl ether each in an amount of at least 5 vol.- %, more preferably at least 10 vol.- %, based on the volume of the solvent mixtures. Preferably, none of these two components is present in an amount of more than 85 vol.- %, more preferably of more than 80 vol.- %, more preferably of more than 70 vol.- %, still more preferably of more than 60 vol.- %.

The present invention also relates to compositions containing the solvent mixture as defined herein. Preferably, the composition contains at least 40 vol.- % of the solvent mixture.

The present invention furthermore refers to the use of solvent mixtures or compositions containing such solvent mixtures as described herein as blowing agents, cooling liquids, solvents, desiccating agents or degreasing agents for solid surfaces.

The present invention also provides a method for the manufacture of polymer foams using a solvent mixture or composition as described herein. In an especially preferred embodiment of the invention, the method refers to the manufacture of polymeric cellular foams, which comprises reacting isocyanurate with a polyol or mixtures of polyols in the presence of a solvent mixture or composition according to the present invention.

The present invention furthermore refers to polymeric cellular foams obtainable according to the above described method. Preferably, the polymeric cellular foams are closed pore cellular foams.

It has been unexpectedly found that the solvent mixtures of the present invention, in particular ternary solvent mixtures consisting essentially of (preferably: consisting of) 1,1,1,3,3-pentafluorobutane (365-mfc), 1,1,2,2-tetrafluoroethyl methyl ether (HFE-254pc), and a compound selected from the group consisting of cyclopentane, n-pentane and isopentane can form an azeotropic or pseudoazeotropic solvent mixture. Preferably, the solvent mixtures of the present invention are azeotropic or pseudoazeotropic solvent mixtures

The thermodynamic state of a fluid is fundamentally defined by four interdependent variables: the pressure (P), the temperature (T), the composition of the liquid phase (X) and the composition of the gas phase (Y).

An azeotropic solvent mixture is a specific system containing 2, 3 or more solvents for which, at a given temperature and at a given pressure, the composition of the liquid phase X is the same as the composition of the gas phase Y.

A pseudoazeotrope is a system containing 2 or more components for which, at a given temperature and at a given pressure, X is substantially the same as Y (± 5 vol.- %). In practice, this means that the constituents of such azeotropic and pseudoazeotropic systems cannot be easily separated by distillation and, consequently, their compositions remain constant in polymeric cellular foam blowing operations.

The azeotropic or pseudoazeotropic solvent mixtures according to the present invention are especially advantageous for the production of polymer foams, because the evaporation of some part of the solvent mixture does not change the volume percentages of the solvents in the remaining liquid mixture. The condensation of some part of the solvent mixture in the polymer foams will therefore not change the gaseous composition remaining in the polymer foams.

The polymer foams (preferably closed cell polymer foams) prepared by using solvent mixtures according to the present invention have improved or similar properties (good heat conductivity, high stability etc.) compared to polymer foams prepared by using known blowing agents, combined with a lower global warming potential.

The solvent mixtures according to the present invention are environmental friendly because they have a reduced proportion of hydrofluoroalkanes and can be used instead of chlorinated hydrofluoroalkanes in order to avoid environmental problems caused by the destruction of the ozone layer or the absorption of thermal radiation emitted by the earth.

The boiling points of the pure solvents as used for the ternary solvent mixtures of the invention are: 1,1,1,3,3-pentafluorobutane (365-mfc), 40°C, 1,1,2,2-tetrafluoroethyl methyl ether (HFE-254pc) 37°C, cyclopentane, 49°C, n-pentane, 36°C and isopentane 28°C.

The solvent mixtures according to the invention preferably have a boiling point which is 30°C or lower, further preferred 28°C or lower, further preferred 27°C or lower, further preferred 26°C or lower, further preferred 25°C or lower, further preferred 24.5°C or lower, and further preferred 24.4°C or lower at atmospheric pressure. Solvent mixtures of the present invention with such a boiling point are pseudoazeotropic or azeotropic. It is additionally preferred that the solvent mixture has a boiling point of at least 23°C, further preferred of at least 24°C. The boiling points of the solvent mixtures where determined using standard methods. The solvent mixtures described herein are preferably azeotropic sovent mixtures or pseudoazeotropic solvent mixtures, in which the amounts of solvents deviate from the azeotropic solvent mixtures to some extent and have the desired boiling point according to the invention.

The solvent mixtures according to the invention contain preferably at least 10 vol.- % 365-mfc, 10 vol.- % HFE-254pc and 10 vol.- % of the pentane. None of these components is preferably present in an amount exceeding 80 vol.- %.

In another preferred embodiment of the present invention, the ternary solvent mixtures (consisting of 1,1,1,3,3-pentafluorobutane (365-mfc), 1,1,2,2-tetrafluoroethyl methyl ether (HFE-254pc), cyclopentane/ n-pentane/isopentane) are characterized in that their boiling point (at atmospheric pressure) differs from the boiling point of the azeotropic ternary solvent mixture composed of the same solvents by at most 3°C, preferably at most 2°C, further preferred at most 1.5°C, further preferred at most 1°C, further preferred at most 0.5°C.

The present invention also refers to compositions containing the solvent mixtures as described above. In addition to the solvent mixture such compositions can comprise any materials, compounds, additives or additional solvents which are necessary for the use of the compositions for the desired purpose. Materials, compounds, additives and additional solvents are well known in the art. Additives can for example be stabilizers of the azeotropic or pseudoazeotropic ternary solvent mixture (such as nitromethane or a-methylstyrene), surface-active agents, antioxidizing agents, flame-retardant agents and/or pigments. Compounds can e.g. be any monomers or polymerization initiators which are necessary for preparing polymer foams. An additional solvent can e.g. be CO₂ However, the compositions, preferably, do not contain any additional solvents. Preferably, the compositions according to the invention contain the solvent mixtures in an amount of at least 40 vol.- %, further preferred at least 50 vol.- %, further preferred at least 60 vol.- %, further preferred at least 70 vol.- %, further preferred at least 80 vol.- %, further preferred at least 85 vol.- %, further preferred at least 90 vol.- %, further preferred at least 95 vol.- %, further preferred at least 98 vol.- %, and most preferred at least 99 vol.- %.

The solvent mixtures and compositions containing the solvent mixtures can be prepared by methods commonly used in the art.

The solvent mixtures according to the invention can preferably be used in compositions like premixes for polymer foams, further preferred are premixes for polyurethane or polyisocyanurate foams. Such premixes contain the solvent mixture (as a blowing agent), the monomers necessary for the polymerization reaction and, if necessary, polymerization initiators. For preparing polyurethane or polyisocyanurate foams the compositions contain the solvent mixture according to the invention (preferably azeotropic or pseudoazeotropic), at least one polyol, and optionally various commonly used additives, such as, water, catalysts, surface-active agents, antioxidizing agents, flame-retardant agents and/or pigments.

The invention also relates to the use of the solvent mixtures as described above and compositions containing those solvent mixtures as refrigerating fluids, as solvents, as desiccating agents or as degreasing agents for solid surfaces.

The solvent mixtures as described above and compositions containing those solvent mixtures are especially suitable for the blowing of polymeric cellular foams. The polymeric cellular foams can be obtained according to various processes. A commonly used process consists in injecting, under pressure, a blowing agent into a molten polymeric mixture to be expanded in an extruder. The decompression obtained at the outlet of the extruder results in the expansion of the polymeric mixture with formation of a foam composed of cells filled with the blowing agent. Polystyrene foams are generally obtained by this process. Another process, typically used to manufacture polyurethane or polyisocyanurate foams, consists in reacting an isocyanate with an appropriate amount of a polyol or of a mixture of polyols, in the presence of a blowing agent consisting of a volatile liquid, which is evaporated by the heat given off by the reaction between the isocyanate and the polyol. The compositions according to the invention are particularly recommended for the blowing of polyurethane or polyisocyanurate foams, very particularly for manufacturing rigid foams. In this case, the blowing agents are generally used in an amount of 1 to 40, typically of 15 to 35, parts by weight per 100 parts by weight of polyol.

In a preferred embodiment, the invention relates to blowing agents for polymeric cellular foams, which are characterized in that they contain the solvent mixture according to the invention inside the cells of the foams. Such cellular foams can be identified by analyzing the content of the cells of the foams e.g. using gaschromatographical methods. The polymeric cellular foams according to the invention contain liquid or gaseous solvents in the cells of the cellular foam, wherein the ratio of the solvents corresponds to a (preferably azeotropic or pseudoazeotropic) solvent mixture according to the present invention in the liquid state.

The determination of the azeotropic solvent mixtures and the use of a solvent mixture as a blowing agent is described in the examples below.

**Example 1**

| **365-mfc (vol.- %)** | **HFE-254pc (vol.- % )** | **Cyclopentane (vol.- %)** | **Isopentane (vol.- %)** | **n-pentane (vol.- %)** | **Boiling point (atmospheric pressure)** |
|---|---|---|---|---|---|
| 33 | 33 | 34 | - | - | 24.14°C |
| 33 | 33 | - | 34 | - | 24.38°C |
| 33 | 67 | 0 | | 0 | 28.53°C |
| 0 | 50 | 0 | 50 | 0 | 22.35°C |
| 67 | 0 | 0 | 33 | 0 | 24.35°C |

In order to obtain mixtures according to the invention, the amounts of solvents as indicated in the table were mixed in a glass vessel equipped with temperature sensors, connected with a PC registration, dropping funnel or syringe and cooler, covered with foil. The boiling point of the resulting mixtures can be determined by using standard methods. For example, it is possible to use a thermometer immersed in a glass device composed of a 50 ml distillation flask surmounted by a reflux condenser.

### Example 2 - Preparation of polymer foams using blowing agents

The preparation of foams followed a standard lab-procedure: Using a standard Polyol-formulation above mentioned mixtures were mixed in homogeneously. Finally a typically isocyanate (crude MDI) was added and immediately mixed which started the polymerization. Mixture was immediately poured in a rectangular paper bag for forming a block.

## Claims

1. A solvent mixture comprising 1,1,1,3,3-pentafluorobutane (365-mfc), 1,1,2,2-tetrafluoroethyl methyl ether (HFE-254pc), and a compound selected from the group consisting of cyclopentane, n-pentane and isopentane.

2. The solvent mixture according to claim 1, having a boiling point which is below 30°C at atmospheric pressure.

3. The solvent mixture according to claims 1 or 2, wherein the solvent mixture comprises at least 10 vol.- % of the compound selected from the group consisting of cyclopentane, n-pentane and isopentane.

4. The solvent mixture according to any of claims 1 to 3, which is a ternary solvent mixture consisting essentially of 1,1,1,3,3-pentafluorobutane (365-mfc), 1,1,2,2-tetrafluoroethyl methyl ether (HFE-254pc), and a compound selected from the group consisting of cyclopentane, n-pentane and isopentane.

5. The solvent mixture according to claim 4, which is a ternary solvent mixture consisting of 1,1,1,3,3-pentafluorobutane (365-mfc), 1,1,2,2-tetrafluoroethyl methyl ether (HFE-254pc), and a compound selected from the group consisting of cyclopentane, n-pentane and isopentane.

6. The solvent mixture according to any of claims 1 to 5 comprising at least 5 vol.- % of each of 1,1,1,3,3-pentafluorobutane (365-mfc) and 1,1,2,2-tetrafluoroethyl methyl ether (HFE-254pc).

7. The solvent mixture according to any of claims 1 to 6 containing cyclopentane.

8. Composition containing a mixture as defined in claims 1 to 7.

9. Composition according to claim 8, wherein the composition contains at least 40 vol.- % of the ternary solvent mixture.

10. Use of a ternary solvent mixture or composition according to any of claims 1 to 9 as a blowing agent, cooling liquid, solvent, desiccating agent or degreasing agent for solid surfaces.

11. Method for the manufacture of polymeric cellular foam, which comprises reacting isocyanurate with a polyol or mixture of polyols in the presence of a blowing agent, **characterized in that** the blowing agent is a solvent mixture or composition according to any of claims 1 to 9.

12. Polymeric cellular foam obtainable according to the method of claim 11.

13. Polymeric cellular foam according to claim 12, which is a closed pore cellular foam.
